Europäisches Patentamt

European Patent Office

Office européen des brevets

(11) Publication number: **0 376 357**
**A1**

## EUROPEAN PATENT APPLICATION

(21) Application number: **89202624.6**

(22) Date of filing: **17.10.89**

(51) Int. Cl.5: **B65H 23/02, B29D 30/30,**
**B23Q 35/128, B23Q 17/24,**
**G05B 19/18**

(30) Priority: **23.12.88 NL 8803156**

(43) Date of publication of application:
**04.07.90 Bulletin 90/27**

(84) Designated Contracting States:
**AT BE CH DE ES FR GB GR IT LI LU NL SE**

(71) Applicant: **VMI EPE HOLLAND BV**
**Gelriaweg 16**
**NL-8161 RK Epe(NL)**

(72) Inventor: **Kuijpers, Johannes Anthonius Maria**
**De Bongerd 24**
**NL-6584 DH Molenhoek(NL)**
Inventor: **Regterschot, Martinus**
**De Wangen 18/1**
**NL-8191 NZ Wapenveld(NL)**

(74) Representative: **Kooy, Leendert Willem et al**
**OCTROOIBUREAU VRIESENDORP & GAADE**
**P.O. Box 266**
**NL-2501 AW The Hague(NL)**

(54) **Centering device.**

(57) Centering device comprising means for continuously posing the centre (4) of the distance (6, 7) between the two edges of all portions of a strip onto the desired diametral circumferential line of a drum (5), said means at least consisting of a marking in the shape of at least one unevenness that extends longitudinally over or parallel to the centre of the distance between the two edges of the strip at all portions of the strip, of a device (8) for transmitting light rays to the strip and furthermore of a device (9) for detecting the light rays reflected by the strip.

FIG.1

## Centering device

The invention relates to a centering device comprising means for continuously posing the centre of the distance between the two edges of all portions of a strip onto the desired diametral circumferential line of a drum, said means at least consisting of a marking of the centre of all portions of the strip, of a device for transmitting light rays to the strip and furthermore of a device for detecting the light rays reflected by the strip.

It is known to center a strip of any material by continuously observing the position of one of the two edges of the travelling strip and, if that position changes, to shift the entire strip transversely to the extent necessary to return the edge in question to the desired position. Although in this arrangement the edge in question will be maintained in the desired position, for a strip of varying width the centre of the distance between the two edges of all portions of said strip will end up in changing positions.

This is a drawback when building pneumatic tyres, and particularly radial pneumatic tyres, as these are built up from a large number of layers of strip-shaped unvulcanized rubber, which is a soft and sticky material, said strips moreover being relatively thin, so that they can easily be deformed due to a great many causes, resulting in a varying width of the strip. However, for obtaining a pneumatic tyre with good properties such as steady rolling, it is necessary that all cross-sections of the pneumatic tyre are mirror-symmetrical. In other words, it is necessary that in all cross-sections of the pneumatic tyre, there is an equal amount of material to the left and the right of the symmetric plane.

This implies that when building a pneumatic tyre on a building drum, the strips of unvulcanized rubber have to be arranged precisely symmetrically with respect to a plane perpendicular to the centre line of the building drum, said plane being equal to the symmetric plane of the cross-sections of the pneumatic tyre to be formed and built out of these strips. As, due to the deformability of unvulcanized rubber, not every strip of unvulcanized rubber is always equally wide, observing the positions of one of the edges of the strip in question is insufficient to obtain the above-meant symmetric positioning of the strip on the building drum. This problem is particularly important for air-proof inner layers of a radial tyre, as these layers are formed from wide, thin strips of hot-rolled unvulcanized rubber, said strips being pulled away from a supply roll, so that these strips show variations in their width due to rolling and also in their position on the supply roll and, moreover, are also deformed as they are pulled off the supply roll.

According to the invention, this problem is solved in that the marking of the centre of all portions of the strip consists in at least one unevenness that extends longitudinally over or parallel to the centre of the distance between the two edges of the strip at all portions of the strip.

Preferably, here the at least one unevenness is a ridge that extends symmetrically between the two edges of the strip over the length of the strip.

According to the invention, it is also possible that the at least one unevenness is a groove, extending symmetrically between the two edges of the strip over the length of the strip.

Although it is known per se to mark the centre of all portions of the strip by applying a line of paint, this is not applicable in the manu facture of pneumatic tyres, as paint prevents the adherence between layers of unvulcanized rubber.

The invented marking in the form of one or two ridges or grooves can indeed be applied in layers of unvulcanized rubber as these unevennesses are quite slight, e.g. 0.3 mm wide and 0.3 mm high at a ridge or 0.3 mm deep at a groove, at a mutal distance, in case two ridges or grooves are used, of 2 mm. On account of these slight dimensions and the deformability of unvulcanized rubber, the layers are properly adhereable at the unevennesses as the unevennesses are compensated or will disappear or are partially compensated and will disappear for another part.

In the following description of an examplary embodiment as indicated in the accompanying drawing, the invented device will be further elucidated. Here,

fig. 1 is a rather schematical top view of a strip, a building drum and the centering means;

fig. 2 is a rather schematical cross-section of a strip with the centering means being perpendicular to the symmetry line 4 in figure 1.

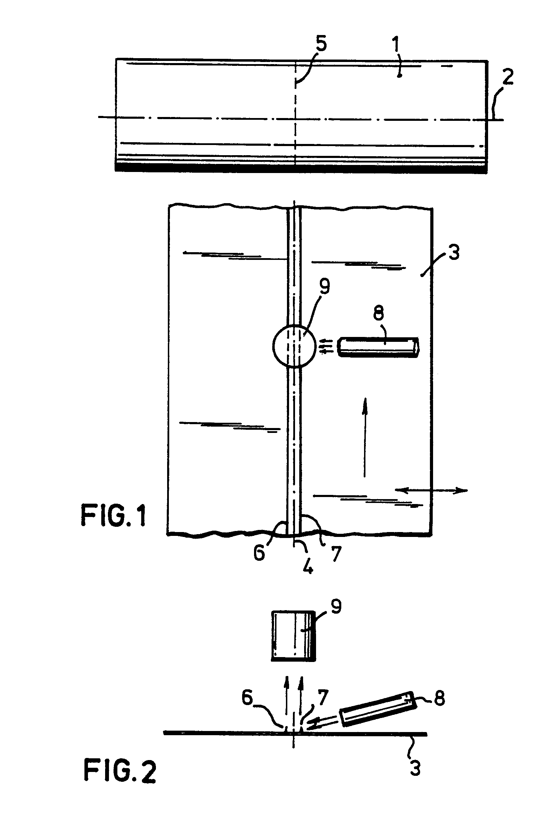

Figure 1 shows a drum 1, such as e.g. a carcass drum known per se for building pneumatic tyres, said drum being rotatable about its centre line 2. A strip 3 has to be led from a not-drawn supply roll onto the drum 1 in such a manner, that a portion of the strip is arranged about the drum with the centre line 4 of the strip on the desired diametral circumferential line 5 of the drum.

In this example, the strip 3 is a wide, thin, hot-rolled strip of unvulcanized rubber, which is a soft and sticky material, so that the strip is easily deformable. Due to the rolling, this deformability has the consequence that the strip is not always equally wide in all its portions, and moreover it has the consequence that the strip may be deformed further as it is pulled off the supply roll. Moreover, the position of the strip on the supply roll may vary parallel to the centre line of the supply roll.

According to the invention, the strip 3 is shaped so, that at least one unevenness 6, 7, formed integral with the strip, extends longitudinally over or parallel along the centre 4 of the distance between the two edges of the strip in all portions of the strip. According to the invention this unevenness may be a ridge 6, 7, which is e.g. 0.3 mm wide and 0.3 mm high. Preferably two ridges 6 and 7 are formed on the strip 3 having e.g. a mutual distance of 2 mm and being symmetrically disposed on either side of the centre of the distance between the two edges of the strip at all portions of the strip.

In figure 1, the edges of the strip have been drawn as straight lines, but in reality these edges are not straight-lined for the above reasons, the deviation from the straight line being so slight, however, that it cannot be represented without exaggeration due to the small scale of figure 1.

Another possibility according to the invention is that the strip 3 is shaped so, that at least one not-drawn groove extends instead of the ridge or ridges 6, 7 over or parallel along the centre 4 of the distance between the two edges of the strip at all portions of the strip. The groove is for example 0.3 mm wide and 0.3 mm deep. For example two grooves may have been formed in the strip at a mutual distance of 2 mm and symmetrically disposed on either side of the centre of the distance between the two edges of the strip at all portions of the strip.

The invention furthermore provides the application of a device 8 known per se for emitting light rays, said bundle of light rays according to figure 2 being directed at an acute angle to the portion of the strip 3 where the ridge or groove or ridges 6, 7 or grooves are roughly located. According to the invention, a camera 9 is arranged in such a manner that it can be used to measure the quantity of light reflected by the strip 3 to the camera 9. This camera is preferably a CCD-line scan camera that is arranged perpendicularly above the ridge(s) or groove (or grooves). As the camera is known per se, it has not been further discussed here, and its arrangement has only been schematically shown in the drawing. The same is applicable to the light source 8.

On account of the stationary arrangement of the light source 8 and the camera 9, and also since the quantity of light emitted by the light source 8 is constant, the position and/or the intensity of the light reflected at the camera will change if the strip 3 is shifted transversely to the centre line 4 as this lifting will also result in a shifting of the ridge(s) 6, 7 or the groove (or grooves), for the light is reflected differently by a flat portion of the strip 3 than by a ridge 6, 7 or groove.

The camera 9 is coupled with a device known per se for shifting the strip transversely to the-centre line 4 of the strip 3, while said strip is being conveyed to the drum 3. As said shifting device is known per se, a discussion or drawing of said device has not been included. The shifts of the strip observed by the camera are processed in the shifting device so that this shifting device displaces the strip in the direction opposite to the shifts in order to counterbalance them, so that the centre line 4 of the strip 3 is arranged precisely in the desired place on the drum 2.

In the foregoing, the invention has particularly been discussed in relation to strips that are meant to form the internal airproof covering layers onto the carcass layers of a pneumatic tyre, but it goes without saying that the invention is also applicable for other layers or combinations of layers for a pneumatic tyre so as to ensure that this layer or these layers or combinations of layers are arranged onto the building drum in the correct place, with which said place does not have to be diametral circumferential line through the radial symmetric plane of the drum, but can also lie at the desired distance from said radial symmetric plane.

## Claims

1. Centering device comprising means for continuously posing the centre of the distance between the two edges of all portions of a strip onto the desired diametral circumferential line of a drum, said means at least consisting of a marking of the centre of all portions of the strip, of a device for transmitting light rays to the strip and furthermore of a device for detecting the light rays reflected by the strip, **characterized in that** the marking of the centre of all portions of the strip consists in at least one unevenness that extends longitudinally over or parallel to the centre of the distance between the two edges of the strip at all portions of the strip.

2. Centering device according to claim 1, **characterized in that** the at least one unevenness is a ridge that extends symmetrically between the two edges of the strip over the length of the strip.

3. Centering device according to claim 1, **characterized in that** the at least one unevenness is a groove, extending synmetrically between the two edges of the strip over the length of the strip.

4. Centering device according to claim 2 or 3, **characterized in that** the unevenness is 0.3 mm wide,and 0.3 mm high at a ridge or 0.3 mm deep at a groove.

5. Centering device according to claims 2, 3 or 4, **characterized in that** the strip comprises two unevennesses interspaced at 2 mm and disposed symmetrically on either side of the centre of the distance be tween the two edges of the strip at all portions of the strip.

6. Centering device according to one of the preceding claims, **characterized in that** the strip is a layer or a combination of layers of unvulcanized rubber that has to be positioned onto the desired portion of the circumference of a building drum for pneumatic tyres or onto the circumference of the layer or layers positioned beforehand onto said drum.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 243 756 (ERHARDT & LEIMER GMBH) * abstract; column 4, line 53 - column 7, line 41; figures 1,2 * | 1 | B 65 H 23/02 B 29 D 30/30 B 23 Q 35/128 B 23 Q 17/24 G 05 B 19/18 |
| A | --- | 2-4,6 | |
| X | DE-A-3 222 629 (BETRIEBSFORSCHUNGSINSTITUT VDEH) * abstract; figures 1,2 * | 1 | |
| A | --- | 5,6 | |
| X | NASA TECHBRIEF no. 5F, May 1985, page 539,1-2; H.E.SMITH et al.: "Automatic Guidance System for Welding Torches" * the whole document * --- | 1-3 | |
| Y | US-A-4 359 675 (N.M. MILLER) * abstract; column 5, lines 1-41; figures 1,3 * --- | 1,5,6 | |
| Y | EP-A-0 238 195 (UNIMATION INC.) * column 1, line 4; column 2, line 12; figures 1,2 * --- | 1,5,6 | TECHNICAL FIELDS SEARCHED (Int. Cl.5) |
| A | DE-C- 750 202 (F.H. GULLIKSEN) * page 3, lines 52-100; figures 1-3 * --- | 1 | B 29 D B 65 H B 23 Q G 05 B |
| A | EP-A-0 188 817 (HITACHI LTD.) * page 3, line 23 - page 9, line 9; figures 1,2 * --- | 1,3-5 | |

-/-

The present search report has been drawn up for all claims

| Place of search | Date of completion of the search | Examiner |
|---|---|---|
| BERLIN | 19-03-1990 | CUNY J M J C |

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 348 048  (BRIDGESTONE TIRE CO. LTD. et al.) <br> * abstract; page 1, line 36 - page 2, line 16; page 3, line 7 - page 5, line 2; figures 1-3 * <br> --- | 1,6 | |
| A | FR-A-2 280 498  (UNIROYAL INC.) <br> ----- | | |
| | | | TECHNICAL FIELDS SEARCHED (Int. Cl.5) |

The present search report has been drawn up for all claims

| Place of search | Date of completion of the search | Examiner |
|---|---|---|
| BERLIN | 19-03-1990 | CUNY J M J C |